# EUROPEAN PATENT APPLICATION

(11) **EP 0 927 851 A1**
(43) Date of publication of application: **07.07.1999**
(21) Application number: 99105540.1
(22) Date of filing: 08.03.1995
(51) Int. Cl.: F16L 41/06

(54) **Improvements in or relating to tube couplings**

(30) Priority: 09.03.1994 GB 9404548
(62) Divisional of application: 95301525.2
(71) Applicant: Guest, John Derek, Maidenhead, Berkshire SL6 2EX (GB)
(72) Inventor: Guest, John Derek, Maidenhead, Berkshire SL6 2EX (GB)
(74) Representative: Bayliss, Geoffrey Cyril

(57) **Abstract**

A tube coupling for connecting one tube to another comprising, a coupling body (70) having a throughway open at one end of the body, means (36) for connecting said one end of the coupling body to one side of one tube, and a valve (74) for opening and closing the throughway having a passage (75) which is aligned with the throughway in the open position. A seal (76) is mounted in the throughway between said valve and the other end of the throughway for sealing with a tool (77) inserted into the throughway from said other end and through the valve to pierce an opening in said one tube. The other end of the coupling body has a socket (73) to receive an end of a second tube after the previous tool has been withdrawn for flow between the tubes when the valve is open.

## Description

This invention relates to tube couplings and is particularly although not exclusively applicable to a coupling for providing a connection between a main tube and a subsidiary tube. The present case is a divisional from UK Patent Publication No. 2287294 to which reference should be made.

This invention provides a tube coupling for connecting one tube to another comprising, a coupling body having a throughway open at one end of the body, means for connecting said one end of the coupling body to one side of one tube, a valve for opening and closing the throughway having a passage which is aligned with the throughway in the open position, sealing means mounted in the throughway between said valve and the other end of the throughway for sealing with a tool inserted into the throughway from said other end and through the valve to pierce an opening in said one tube, and means to connect another tube to said other end of the coupling body after such tool has been withdrawn for flow between the tubes when the valve is open.

In one arrangement the valve comprises a rotary ball valve having a diametrically extending passage and means to rotate the ball to move the passage into and out of alignment with the throughway.

In a preferred construction according to the invention the throughway may have a partition extending across the throughway between the valve and said other end forming a socket at said other end to receive said other tube, the seal being located in the throughway between the valve and partition and the + partition having an aperture through which the tool can pass.

The following is a description of a specific embodiment of the invention reference being made to the accompanying drawings in which:

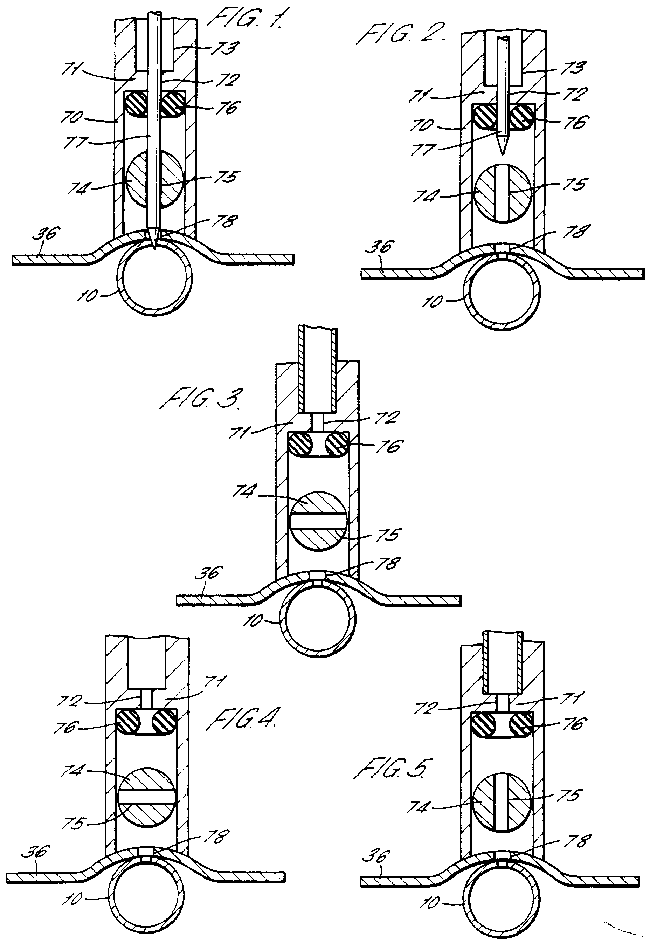

FIGURES 1 to 5 show the step by step operation of a construction according to the invention.

Reference is made to Figures 1 to 5 of the drawings which show a connector body for providing a connection between a main tube and a subsidiary tube.

The connector body comprises a downwardly open cylindrical enclosure 70 to engage the top of the upper clamp plate 36 above the tube 10. The enclosure has an internal partition 71 formed with a bore 72 and an upwardly open socket 73 above the partition.

The lower enclosure in the cylindrical body contains a rotary spherical valve 74 having a diametrically extending through passage 75 which can be aligned with the access of the cylindrical body to open the valve as shown in Figures 1, 2 and 5 or rotated by a mechanism not shown to extend transversely of the cylindrical body to close the valve as shown in Figures 3 and 4. An O-ring seal 76 is mounted in the body under the partition 71 o seal the lower enclosure of the body.

The connector body 70 is secured to the tube 10 by the saddle clamp arrangement much as described with reference to Figures 3 and 4 above. A piercing tool 77 is then inserted through the upper socket of the connector body, through the bore 72 in the partition 70, through the O-ring seal 76, through the valve passage 75 and finally through an opening 78 formed in the plate 36 to engage and pierce a hole in the tube 10 as depicted in Figure 1. Once a hole has been pierced in the tube, fluid will flow into the lower part of the connector body 70 past the valve 74 but will be prevented from escaping through the bore 72 in the partition 71 by engagement of the seal 76 with the tool. Once the tool has been withdrawn from the valve 74 as indicated in Figure 2, the valve can be rotated to the closed position as illustrated in Figure 3. The tool can then be fully withdrawn from the connector body. The subsidiary tube 11 is then inserted into the socket 73 and secured by a tube coupling such as described and illustrated in our UK Patent Specification No. 1520742 and once the tube is in place, the valve 74 can be moved to the open position as shown in Figure 5 to establish flow between the tube 10 and tube 11.

It will be appreciated that many modifications may be made to the above described embodiments without departing from the scope of the invention. For example the ball valve shown may be replaced by any form of valve which is an open position provides a passage through which a probe may pass.

## Claims

1. A tube coupling for connecting one tube to another comprising, a coupling body having a throughway open at one end of the body, means for connecting said one end of the coupling body to one side of one tube, a valve for opening and closing the throughway having a passage which is aligned with the throughway in the open position, sealing means mounted in the throughway between said valve and the other end of the throughway for sealing with a tool inserted into the throughway from said other end and through the valve to pierce an opening in said one tube, and means to connect another tube to said other end of the coupling body after such tool has been withdrawn for flow between the tubes when the valve is open.

2. A tube coupling as claimed in Claim 1, wherein the valve comprises a rotary ball valve having a diametrically extending passage and means to rotate the ball to move the passage into and out of alignment with the throughway.

3. A tube coupling as claim in Claim 1 or Claim 2, wherein the throughway has a partition extending across the throughway between the valve and said other end forming a socket at said other end to receive said other tube, the seal being located in the throughway between the valve and partition and the partition having an aperture through which the tool can pass.
